**Europäisches Patentamt**

**European Patent Office**

**Office européen des brevets**

(19)

(11) Veröffentlichungsnummer: **0 149 708**
**B1**

(12) **EUROPÄISCHE PATENTSCHRIFT**

(45) Veröffentlichungstag der Patentschrift:
**27.09.89**

(51) Int. Cl.⁴: **F 16 J 15/32**

(21) Anmeldenummer: **84108716.6**

(22) Anmeldetag: **23.07.84**

(54) **Kasettendichtung.**

(30) Priorität: **21.01.84 DE 3402108**

(43) Veröffentlichungstag der Anmeldung:
**31.07.85 Patentblatt 85/31**

(45) Bekanntmachung des Hinweises auf die Patenterteilung:
**27.09.89 Patentblatt 89/39**

(84) Benannte Vertragsstaaten:
**AT BE CH DE FR GB IT LI LU NL SE**

(56) Entgegenhaltungen:
**EP-A- 0 082 239**
**DE-C- 1 101 074**
**FR-E- 83 859**
**US-A- 2 245 475**

(73) Patentinhaber: **Firma Carl Freudenberg, Höhnerweg 4,**
**D-6940 Weinheim/Bergstrasse (DE)**

(72) Erfinder: **Hölzer, Helmut, Dipl.-Ing., Hegelstrasse 15,**
**D-6940 Weinheim (DE)**

(74) Vertreter: **Weissenfeld-Richters, Helga, Dr.,**
**Höhnerweg 2, D-6940 Weinheim/Bergstrasse (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine Kassettendichtung, bestehend aus einem Außenring mit wenigstens zwei ihn axial begrenzenden Dichtflächen, einem Innenring mit zwei den Außenring axial begrenzenden Dichtflächen, einem Innenring mit zwei den Außenring axial umgreifenden Flanschen, die unter einer elastischen Vorspannung an den Dichtflächen anliegen und von denen wenigstens einer gleichmäßig auf dem Umfang verteilte Drallnuten zur Rückförderung von Leckflüssigkeit oder Fremdkörpern aufweist.

Eine solche Kassettendichtung wird in der US-PS 4 094 518 beschrieben. Die Drallrippen und Drallnuten sind dabei im unmittelbaren Bereich der eigentlichen Dichtfläche angeordnet, was dazu führt, daß Leckflüssigkeit bei Wellenstillstand durch die Drallnuten hindurch auf die Außenseite der Dichtung gelangen kann, was nicht erwünscht ist. Die beiden Flansche des Innenringes haben außerdem im innenliegenden Bereich einen größeren axialen Abstand voneinander als im außenliegenden Bereich. Die Herstellung setzt insofern die Verwendung aufwendiger Formwerkzeuge voraus, insbesondere auch im Hinblick auf die erforderliche, präzise Ausbildung der Drallrippen auf der Innenseite des sich im Inneren erweiternden Hohlraumes des Innenringes.

Aus der US-A-2 245 475 ist eine Kassettendichtung bekannt, welche Dichtflächen aufweist, die einen gegenseitigen Abstand haben, der sich mit zunehmendem Abstand von der Rotationsachse vergrößert. Die Herstellung einer solchen Kassettendichtung ist aufgrund der komplizierten Gestalt sehr aufwendig. Auch ist das damit erzielte Abdichtungsergebnis wenig befriedigend.

Aus der EP-A-82 239 ist ein Radialwellendichtring bekannt, bei der die trompetenartig in der einen Richtung vorgebeugte Dichtlippe von drei Nuten ganz durchdrungen ist, die in Umfangsrichtung durch drei Rippen voneinander getrennt sind. Dem bei Wellenstillstand erzielten, guten Abdichtungsergebnis steht ein sehr schlechtes Abdichtungsergebnis bei höheren Wellendrehzahlen gegenüber.

Der Erfindung liegt die Aufgabe zugrunde, eine Kassettendichtung zu entwickeln, die die vorstehend angegebenen Nachteile nicht mehr aufweist. Die Kassettendichtung soll leicht und kostengünstig herstellbar sein und über lange Zeiträume bei höchsten Wellendrehzahlen und bei Wellenstillstand ein ausgezeichnetes Abdichtungsergebnis gewährleisten.

Zur Lösung dieser Aufgabe wird erfindungsgemäß eine Kassettendichtung der eingangs genannten Art vorgeschlagen, die dadurch gekennzeichnet ist, daß die Dichtflächen des Außenringes einen gegenseitigen Abstand haben, der sich mit zunehmendem Abstand von der Rotationsachse vergrößert, daß der dem abgedichteten Medium zugewandte Flansch von den Drallnuten ganz durchdrungen ist, daß die Drallnuten radial außerhalb der Dichtfläche angeordnet sind und daß zwischen den Drallnuten Drallrippen angebracht sind, die im vorspringenden Bereich eine sich in Richtung der jeweils zugehörigen Dichtfläche.

Die Drallnuten bestehen bei der vorgeschlagenen Kassettendichtung aus Einkerbungen, die die Flansche ganz durchdringen. Sie sind gleichmäßig auf dem Umfang verteilt und begrenzen zugleich die in den Zwischenräumen angeordneten Drallrippen. Letztere haben im vorspringenden Bereich, d.h. in radialer Richtung nach außen, eine sich zunehmend in Richtung der jeweils zugehörigen Dichtfläche vermindernde Dicke. Die Anströmfläche der Flanken ist in gleichem Maße reduziert, wodurch die Drallrippen dem aus Richtung des Außenringes nachströmenden Flüssigkeitsfilm ausgezeichnet zu widerstehen vermögen. Bleibende Deformierungen an den Drallrippen sind daher bei der vorgeschlagenen Ausführung auch nach längerer Betriebszeit nicht zu befürchten. Der aus Richtung des Außenringes anströmende Flüssigkeitsfilm wird gleichsam aufgetrennt, wobei der nicht zur Schmierung der Dichtfläche benötigte, größere Volumenanteil von der dynamischen Dichtungszone weg und zurück in den abgedichteten Raum gefördert wird.

Die Innenseite der Drallrippen wird in jedem Fall durch eine Fläche gebildet, die die an der Dichtfläche anliegende Fläche kontinuierlich und ohne sprunghafte Richtungsänderung ergänzt.

Die Drallrippen und die Drallnuten können außenseitig durch eine in sich geschlossene, kontinuierliche Fläche begrenzt werden, die die Rotationsachse im wesentlichen parallel zu deren Erstreckung sinuskurvenähnlich umschließt. Die Drallrippen zeichnen sich bei einer solchen Ausführung durch eine besonders große mechanische Widerstandsfähigkeit aus, was die Vermeidung von Deformationen unter Betriebsbedingungen begünstigt.

Die Strömungsbedingungen in den Drallnuten sind klar definiert. Auch eine kavitationsbedingte Schädigung der Drallrippen ist daher nicht ohne weiteres zu befürchten.

Nach einer anderen Ausgestaltung wird vorgeschlagen, daß die Drallrippen in Umfangsrichtung durch achsparallele Radialflächen begrenzt sind. Die Herstellung ist in diesem Falle wesentlich einfacher als in dem vorstehend angesprochenen. Sie eignet sich insbesondere für Anwendungsfälle, in denen mit Ablagerungen aus dem abgedichteten Medium im Bereich der Dichtzone gerechnet werden muß.

Die Drallrippen sollen möglichst auf der Außenseite scharfkantig begrenzt sein, um eine möglichst gleichmäßige Auftrennung des aus Richtung des Außenringes anströmenden Ölfilmes zu gewährleisten. Voraussetzung für den Effekt einer solchen Auftrennung ist jedoch die Vermeidung von betriebsbedingt auftretenden Deformationen. Auch im Bereich der außenseitigen Abschlußkante der Drallrippen ist deshalb eine gewisse Mindestdicke nötig, die jedoch bei PTFE einen Wert von 0,5, bei Gummi von 0,8 mm im allgemeinen nicht überschreitet. Die Position der Kante stabilisiert sich im allgemeinen nach kurzer Betriebszeit in einem sehr geringen Abstand von der zugehörigen Dichtfläche. Dieser kann beispielsweise wenige Zehntelmillimeter betragen. Er gewährleistet eine kontinuierliche Schmierung der Dichtfläche unter Betriebsbedingungen und zugleich die Rückführung überschüssiger Flüssigkeit in den abgedichteten Raum.

Die vorgeschlagene Kassettendichtung zeichnet sich durch eine nahezu vollständige Verschleißfreiheit aus sowie durch die nahezu vollständige Vermeidung von Ablagerungen im Bereich der dynamischen Dichtungszone.

Sie ist darüber hinaus zuverlässig auch dann, wenn hohe und häufig wechselnde Drehzahlen der abgedichteten Welle auftreten. Die gute Leichtgänglgkeit begünstigt die Erzielung eines großen Anwendungsspektrums.

In der in der Anlage beigefügten Zeichnung sind zwei beispielhafte Ausführungen der vorgeschlagenen Kassettendichtung in halbgeschnittener Darstellung wiedergegeben. Sie werden nachfolgend beschrieben:

Figur 1 nimmt Bezug auf eine in eine Kühlwasserpumpe eingebaute Kassettendichtung

Figur 2 nimmt Bezug auf eine Ausführung ähnlich derjenigen nach Figur 1, die verbesserte Notlaufeigenschaften aufweist.

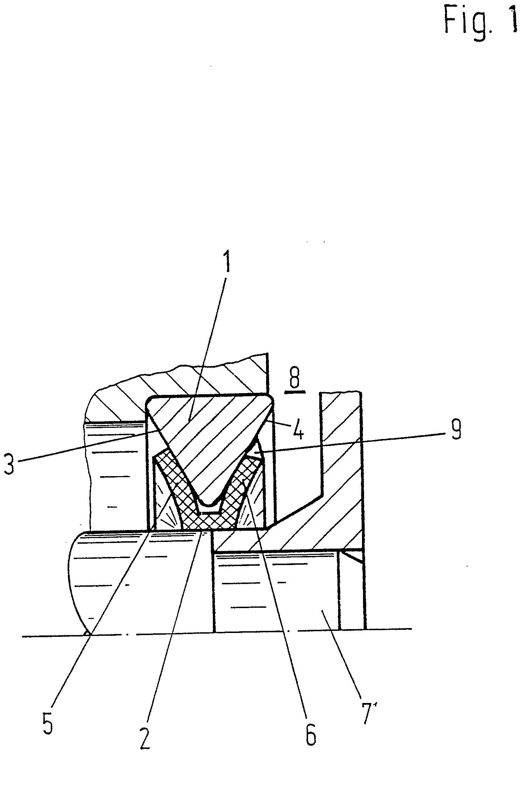

Die in Figur 1 gezeigte Kassettendichtung besteht aus dem Außenring 1 aus PTFE und aus dem Innenring 2 aus Gummi. Der Außenring hat ein symmetrisches Dreiecksprofil und wird in axialer Richtung beiderseits durch Dichtflächen 3 und 4 begrenzt. Der Flankenwinkel zwischen den Dichtflächen beträgt 60°.

Der Innenring hat herstellungsbedingt eine U-förmige Gestalt mit sich parallel zueinander erstreckenden Flanschen 5 und 6. Er wird in der dargestellten Weise in den Außenring 1 eingeknüpft, wobei die beiden Flansche 5, 6 in axialer Richtung auseinandergespreizt werden und sich oberflächeneben an die Dichtflächen 3, 4 anlegen. Zwischen dem Innendurchmesser des Außenringes und dem Nutgrund zwischen den beiden Flanschen 5, 6 des Innenringes ist ein radialer Abstand vorhanden, wodurch eine Relativverlagerung zwischen dem Innenring und dem Außenring in radialer Richtung ohne weiteres möglich ist. Die die Flanschen 5, 6 in der Nute verbindende, achsparallele Fläche hat eine größere axiale Erstreckung als die unmittelbar gegenüberliegende Fläche des Außenringes. Sie kann durch eine Ringwendelfeder zusätzlich belastet werden, was die statische Festlegung des Innenringes auf der Welle begünstigt.

Der Innendurchmesser des Innenringes 2 ist so bemessen, daß die Drehbewegung des abgedichteten Maschinenteiles 7 ohne weiteres übertragen wird. Der Innenring 2 liegt infolgedessen mit seinen Flanschen 5, 6 gleitend an den Dichtflächen 3, 4 des Außenringes 1 an.

Für den Einbau der Kassettendichtung erübrigen sich spezielle Justiermaßnahmen insofern, als sich der Innenring relativ leicht in axialer Richtung auf der Oberfläche des abgedichteten Maschinenteiles 7 verschieben läßt.

Innenring 2 und Außenring 1 sind dadurch in axialer Richtung stets einander in optimaler Weise zugeordnet. Auch axiale Relativbewegungen des abgedichteten Maschinenteiles 7 werden dadurch selbsttätig ausgeglichen.

Der dem abgedichteten Medium 8 zugewandte Flansch 6 wird außenseitig durch Drallrippen 9 begrenzt, die gleichmäßig auf dem Umfang verteilt sind.

Die Drallrippen 9 werden in Umfangsrichtung durch achsparallel verlaufende Radialflächen begrenzt, auf der von dem Außenring 1 abgewandten Seite durch eine Kegelfläche und auf der dem Außenring 1 zugewandten Seite durch eine die Dichtfläche stetig verlängernde Fläche. Letztere und die von dem Außenring abgewandte Begrenzungsfläche begrenzen einander in einer scharfen Kante. Diese weist unter Betriebsbedingungen einen Abstand von der Dichtfläche 4 auf, der etwa ein Zehntelmillimeter beträgt.

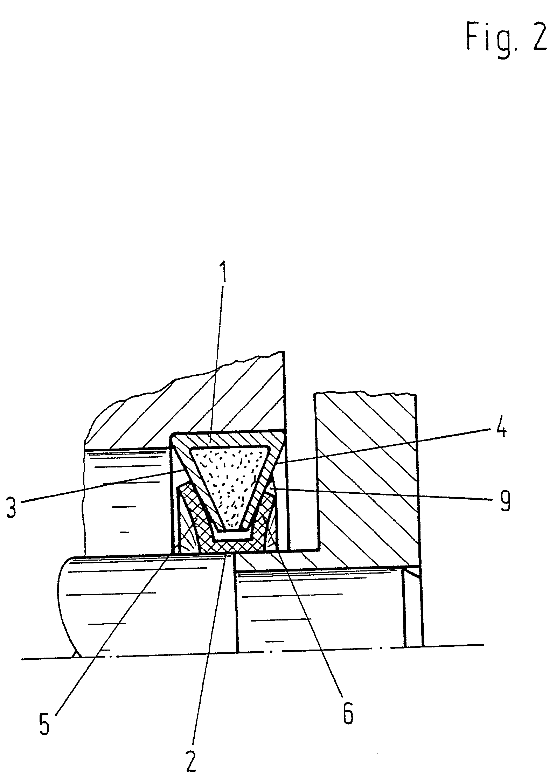

Die Ausführung nach Figur 2 ist äußerlich derjenigen nach Figur 1 sehr ähnlich. Der Außenring besteht jedoch in diesem Falle aus einem tiefgezogenen Stahlblech, das im Inneren mit einem Schmierstoff gefüllt ist, beispielsweise mit einem Gemisch aus Graphit und PTFE-Pulver. Der Außenring ist innenseitig durchgehend geöffnet.

Der Innenring 2 besteht aus PTFE. Er weist ebenso herstellungsbedingt ein U-förmiges Profil auf mit sich parallel zueinander erstreckenden Flanschen 5 und 6. Während des Einfügens in den Außenring 1 ergibt sich das dargestellte, V-förmige Profil sowie die erforderliche elastische Anpressung zwischen den Flanschen 5, 6 und den Dichtflächen 3, 4.

Der Flansch 6 ist auf der Außenseite mit Drallrippen 9 versehen. Diese sind durch gleichmäßig auf dem Umfang verteilte Drallnuten voneinander getrennt. Die Drallrippen und die Drallnuten werden außenseitig durch eine in sich geschlossene, kontinuierliche Fläche begrenzt, die die Rotationsachse im wesentlichen parallel zu deren Erstreckung, sinuskurvenähnlich umschließt. Die von dem Außenring 1 abgewandte Begrenzungsfläche der Drallrippen 9 ist auch in diesem Falle im vorspringenden Bereich abgeschrägt in Richtung der Dichtfläche 4. Die die Drallrippen auf der gegenüberliegenden Seite begrenzende Fläche bildet eine kontinuierliche Verlängerung der an der Dichtfläche 4 anliegenden Fläche des Flansches 6.

Diese Fläche und die davor beschriebene, von dem Außenring 1 abgewandte Fläche der Drallrippen 9, begrenzen einander an dem am weitesten außen liegenden Punkt nahezu in einer scharfen Kante

Die in Figur 2 gezeigte Kassettendichtung zeichnet sich durch besonders gute Notlaufeigenschaften aus. Diese werden dann benötigt, wenn der normale Betrieb ein gelegentliches Trockenlaufen mitumfaßt. Die notwendige Kühlung und Schmierung der dynamischen Abdichtungszone wird dadurch beeinträchtigt. Sie führt bei der vorgeschlagenen Ausführung zu einer Erwärmung des in dem Außenring gespeicherten Schmierstoffes. Dieser vermindert dadurch seine Viskosität und gelangt über die am Innendurchmesser des Außenringes angeordnete Öffnung auf die Dichtflächen 3, 4. Ein weiteres Ansteigen der Temperaturen wird dadurch wirksam verhindert.

## Patentansprüche

1. Kassettendichtung, bestehend aus einem Außenring mit wenigstens zwei ihn axial begrenzenden Dichtflächen, einem Innenring mit zwei den Außenring axial umgreifenden Flanschen, die unter einer elastischen Vorspannung an den Dichtflächen anliegen und von denen wenigstens eine gleichmäßig auf dem Umfang verteilte Drallnuten zur Rückförderung von Leckflüssigkeit oder Fremdkörpern aufweist, dadurch gekennzeichnet, daß die Dichtflächen (3, 4) einen gegenseitigen Abstand haben, der sich mit zunehmendem Abstand von der Rotationsachse vergrößert, daß der dem abgedichteten Medium zugewandte Flansch (6) von Drallnuten ganz durchdrungen ist, daß die Drallnuten radial außerhalb der Dichtfläche angeordnet sind und daß zwischen den Drallnuten Drallrippen (9) vorhanden sind, die im vorspringenden Bereich eine sich in Richtung der jeweils zugehörigen Dichtfläche vermindernde Dicke haben.

2. Kassettendichtung nach Anspruch 1, dadurch gekennzeichnet, daß die Drallrippen und Drallnuten außenseitig durch eine in sich geschlossene, kontinuierliche Fläche begrenzt sind, die die Rotationsachse im wesentlichen parallel zu deren Erstreckung sinuskurvenähnlich umschließt.

3. Kassettendichtung nach Anspruch 1, dadurch gekennzeichnet, daß die Drallrippen in Umfangsrichtung durch achsparallele Radialflächen begrenzt sind.

4. Kassettendichtung nach Anspruch 1 bis 3, dadurch gekennzeichnet, daß die Drallrippen auf der Außenseite scharfkantig begrenzt sind.

## Claims

1. A shaft seal, composed of an outer ring having at least two sealing surfaces which bound it axially, an inner ring having two flanges which embrace the outer ring axially and bear under a resilient pre-stress against the sealing surfaces and of which at least one has helical grooves distributed evenly over the circumference for the return of leaking liquid or foreign bodies, characterized in that the sealing surfaces (3, 4) are spaced apart by an amount which increases with increasing distance from the axis of rotation, in that the flange (6) facing the sealed-off medium is penetrated right through by helical grooves, in that the helical grooves are arranged radially outside the sealing surface and in that between the helical grooves there are helical ribs (9) which have in the projecting region a thickness which decreases in the direction of the respectively associated sealing surface.

2. A shaft seal according to claim 1, characterized in that the helical ribs and helical grooves are bounded on the outside by a self-contained continuous surface, which encloses the axis of rotation essentially parallel to its extent in a manner resembling a sine curve.

3. A shaft seal according to claim 1, characterized in that the helical ribs are bounded in circumferential direction by axially parallel radial surfaces.

4. A shaft seal according to any of claims 1 to 3, characterized in that the helical ribs are bounded in sharp-edged manner on the outside.

## Revendications

1. Joint pour arbre constitué d'une bague extérieure avec au moins deux surfaces d'étanchéité qui la délimitent axialement, une bague intérieure avec deux brides s'engageant axialement avec la bague extérieure qui appuie avec précontrainte élastique sur les surfaces d'étanchéité et qui présente au moins une rainure hélicoïdale répartie uniformément sur la périphérie pour le renvoi du liquide de fuite ou des corps étrangers, caractérisé en ce que les surfaces d'étanchéité (3, 4) ont une distance mutuelle qui augmente avec la distance par rapport à l'axe de rotation, en ce que la bride (6) tournée vers le fluide à contenir est traversée entièrement par les rainures hélicoïdales, en ce que les rainures hélicoïdales sont disposées radialement en dehors de la surface d'étanchéité et que des nervures hélicoïdales (9) existent entre les rainures hélicoïdales et présentent une épaisseur qui diminue dans la zone en saillie, en direction de la surface d'étanchéité correspondante.

2. Joint pour arbre selon la revendication 1, caractérisé en ce que les nervures hélicoïdales et les rainures hélicoïdales sont délimitées extérieurement par une surface fermée continue qui entoure l'axe de rotation en forme de sinusoïde, de manière essentiellement parallèle à l'orientation de celui-ci.

3. Joint pour arbre selon la revendication 1, caractérisé en ce que les nervures hélicoïdales sont délimitées, dans la direction de la périphérie, par des surfaces radiales parallèles à l'axe.

4. Joint pour arbre selon les revendications 1 à 3, caractérisé en ce que les nervures hélicoïdales sont délimitées du côté extérieur, par une arête vive.

Fig. 1

1

8

4

9

3

5

2

6

7'

Fig. 2